(19) **Europäisches Patentamt / European Patent Office / Office européen des brevets**

(11) **EP 1 322 018 B1**

(12) **EUROPÄISCHE PATENTSCHRIFT**

(45) Veröffentlichungstag und Bekanntmachung des Hinweises auf die Patenterteilung:
**09.02.2011 Patentblatt 2011/06**

(51) Int Cl.:
*H02H 3/33* (2006.01)     *H02H 1/00* (2006.01)

(21) Anmeldenummer: **02027500.4**

(22) Anmeldetag: **10.12.2002**

(54) **Differenzstrom-Schutzeinrichtung**

Differential current protective device

Dispositif de protection de courant différentiel

(84) Benannte Vertragsstaaten:
**AT BE BG CH CY CZ DE DK EE ES FI FR GB GR IE IT LI LU MC NL PT SE SI SK TR**

(30) Priorität: **18.12.2001 DE 10162255**

(43) Veröffentlichungstag der Anmeldung:
**25.06.2003 Patentblatt 2003/26**

(73) Patentinhaber: **SIEMENS AKTIENGESELLSCHAFT 80333 München (DE)**

(72) Erfinder: **Bauer, Bernhard 93080 Pentling (DE)**

(56) Entgegenhaltungen:
**EP-A- 0 141 352     EP-A- 0 987 805
GB-A- 2 170 367**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf eine Differenzstrom-Schutzeinrichtung mit einem Summenstromwandler, dem sekundärseitig über eine Signalaufbereitungs-Schaltung ein Auslöserelais zur Betätigung eines Schalters im angeschlossenen Leiternetz nachgeschaltet ist. Unter Differenzstrom-Schutzeinrichtung wird insbesondere ein Differenzstrom-Schutzschalter (DI-Schutzschalter) oder Differenzstrom-Zusatz verstanden, bei dem im Gegensatz zu einem Fehlerstrom(FI)-Schutzschalter die Auslösung netzspannungsabhängig erfolgt.

Eine derartige, z. B. aus der EP 0 987 805 A1 bekannte DI-Schutzeinrichtung trennt zum Schutz gegen gefährliche Körperströme bei Überschreiten des sogenannten Bemessungsfehlerstromes sicher und schnell die betroffenen Stromkreise vom Netz. Dazu umfasst der DI-Schutzschalter einen Summenstromwandler, durch dessen Wandlerkern alle stromführenden Leiter eines Leiternetzes geführt sind, und in dessen Sekundärwicklung im Falle eines Fehlerstroms ein Spannungssignal induziert wird, das einen über eine Auslösekreiselektronik mit der Sekundärwicklung verbundenen Auslöser ansteuert. Der Auslöser ist seinerseits mit einem Schaltschloss gekoppelt, über das bei Ansprechen des Auslösers die Kontakte eines in der oder jeder Leitung liegenden Leistungsschalters geöffnet werden. Dabei wird dem vom Leitungsnetz gespeisten Auslösekreis des DI-Schutzschalters oder DI-Zusatzes bei Auftreten eines Fehlerstroms das vom Summenstromwandler abgegebene Signal zugeführt. Eine dieses Spannungssignal gleichrichtende und verstärkende Signalaufbereitungs-Schaltung umfasst einen aktiven Vollweg-Gleichrichter mit zwei in Reihe geschalteten Operationsverstärkern, von denen ein Operationsverstärker als Invertierer und der andere Operationsverstärker als Nicht-Invertierer arbeitet.

Um bei dieser bekannten DI-Schutzeinrichtung sowohl ein kostenoptimales Netzteil verwenden zu können, mit dem jedoch nur eine unipolare Versorgungsspannung zur Verfügung steht, als auch die in der Sekundärwicklung des Summenstromwandlers induzierte bipolare Induktionsspannung verarbeiten zu können, ist einerseits die Erzeugung einer Mittenspannung für die Operationsverstärker und andererseits deren unerwünscht umfangreiche Beschaltung mit Dioden vorgesehen.

Zwar ist bei einer aus der GB 2 170 367 A bekannten, in ähnlicher Weise aus einem Invertierer und einem Nicht-Invertierer aufgebauten Signalaufbereitungs-Schaltung keine Mittenspannungserzeugung vorgesehen. Allerdings ist auch dort der Schaltungsaufwand, insbesondere die umfangreiche externe Beschaltung der Operationsverstärker ebenfalls mit zumindest einer Diode, unerwünscht groß.

Daher werden in der Praxis für die Auswertung des durch einen Fehler- oder Differenzstrom in der Sekundärwicklung des Summenstromwandlers induzierten Signals fast ausschließlich sogenannte "Ground-fault-interrupter-Integrated-Circuits" eingesetzt. Der Vorteil dieser Integrated-Circuits (IC's) liegt darin, dass verschiedene Funktionen, wie z.B. Gleichrichtung, Signalverstärkung und Referenzspannungserzeugung integriert sind und in den meisten Fällen nur wenige externe Bauelemente benötigt werden.

Nachteilig an diesen Bausteinen sind jedoch deren Kostenintensivität und deren häufig hoher Strombedarf, welcher wiederum Folgekosten im Netzteil nach sich ziehen kann. Der Strombedarf dieser Bauelemente ist dabei hoch im Vergleich zu der Stromaufnahme von sogenannten "low power-", "ultra low power-" oder "micro power-Standard-Operationsverstärkern". Darüber hinaus sind solche IC's derart spezifisch, dass diese im Gegensatz zu Standard-Operationsverstärkern nicht in einfacher Typenvielfalt und kostengünstig beziehbar sind.

Der Erfindung liegt daher die Aufgabe zugrunde, eine DI-Schutzeinrichtung der eingangs genannten Art mit einer besonders einfach aufgebauten und insbesondere kostengünstigen Signalaufbereitungs-Schaltung anzugeben.

Diese Aufgabe wird erfindungsgemäß gelöst durch die Merkmale des Anspruchs 1. Dazu ist ein zweistufiger Vollweggleichrichter mit einer als Invertierer arbeitenden ersten Verstärkerstufe und mit einer als Subtrahierer, vorzugsweise als Mehrfach-Subtrahierer, arbeitenden zweiten Verstärkerstufe vorgesehen, die eingangsseitig - zweckmäßigerweise über einen Widerstand - mit dem Ausgang der ersten Verstärkerstufe verbunden ist.

Sowohl ein erster Operationsverstärker der als Invertierer arbeitenden ersten Verstärkerstufe als auch ein diesem ausgangsseitig nachgeschalteter zweiter Operationsverstärker der als vorzugsweise Mehrfach-Subtrahierer arbeitenden zweiten Verstärkerstufe sind lediglich mit ohm'schen Widerständen beschaltet. Zweckmäßigerweise ist dabei der erste Operationsverstärker ausgangsseitig über einen (sechsten) Widerstand mit dem P-Eingang (+) des zweiten Operationsverstärkers verbunden.

Die Beschaltung der Operationsverstärker mit den Widerständen sowie die Dimensionierungs-Bedingungen, die sich aus bestimmten Verhältnissen einzelner Widerstände zueinander ergeben und dabei den jeweiligen Verstärkungsfaktor angeben, ist derart, dass in der ersten Verstärkerstufe negative Eingangssignale oder -spannungen invertiert und dabei verstärkt werden, während bei positiven Eingangssignalen bzw. -spannungen der Verstärkerausgang der ersten Verstärkerstufe auf Masse- oder Null-Potential geht. In der zweiten Verstärkerstufe werden das Eingangssignal und das Ausgangssignal der ersten Verstärkerstufe derart verstärkt und addiert, dass am Ausgang der zweiten Verstärkerstufe die Summe der sich aus diesen verstärkten Signalen ergebenden Spannungen mit lediglich positiven Spannungswerten liegt. Insgesamt liegt somit am Ausgang der zweiten Verstärkerstufe eine gleichgerichtete und verstärkte Eingangsspannung.

In zweckmäßiger Ausgestaltung ist ein erster Widerstand zwischen den Ausgang und den negativen Eingang (N-Eingang) des Operationsverstärkers der ersten Verstärkerstufe geschaltet. Über einen zweiten Widerstand wird die Eingangsspannung dem negativen Eingang des Operationsverstärkers der ersten Verstärkerstufe zugeführt. Optional kann der positive Eingang (P-Eingang) dieses Operationsverstärkers über einen dritten Widerstand gegen Bezugspotenzial oder Masse geschaltet sein.

Die Eingangsspannung wird außerdem über einen Spannungsteiler mit einem vierten und einem fünften Widerstand an den positiven Eingang des Operationsverstärkers der zweiten Verstärkerstufe geführt. Dadurch ist zweckmäßigerweise die Ausgangsspannung der zweiten Verstärkerstufe gleich der Summe aus der verstärkten Eingangsspannung und der zweifach verstärkten Ausgangsspannung der ersten Verstärkerstufe. Dabei ist die Ausgangsspannung der ersten Verstärkerstufe bei positiver Eingangsspannung gleich Null (0V), während bei negativer Eingangsspannung der Ausgang der ersten Verstärkerstufe eine verstärkte positive Ausgangsspannung führt.

Um die zweite Verstärkerstufe besonders vorteilhaft als Mehrfach-Subtrahierer betreiben zu können, ist der Ausgang dieses zweiten Operationsverstärkers über einen (siebten) Widerstand mit dessen negativem Eingang verbunden, der über einen weiteren (achten) Widerstand gegen Bezugspotenzial bzw. Masse geschaltet ist. Die prinzipielle Funktionsweise eines Mehrfach-Subtrahierers ist z.B. in U. Tietze, CH. Schenk, "Halbleiter-Schaltungstechnik", 11. Auflage, Seite 770 ff., beschrieben.

Die mit der Erfindung erzielten Vorteile bestehen insbesondere darin, dass durch einen aus einem Invertierter und einem Subtrahierer aufgebauten zweistufigen Vollweggleichrichter in einfacher Art und Weise mit geringstmöglichem Bauteilaufwand eine zuverlässige Signalverarbeitung im Auslösekreis eines DI-Schutzschalters ermöglicht ist. Dabei ist weder die Erzeugung einer Mittenspannung zum Betreiben der Operationsverstärker des Vollweggleichrichters noch die Beschaltung dessen Operationsverstärkers mit Dioden erforderlich.

Mit dieser insgesamt kostengünstig sowie aus herstellerunabhängigen und in hoher Typenvielfalt verfügbaren Bauelementen aufgebauten Signalaufbereitungs-Schaltung ist somit zusätzlich zum kostenoptimalen Auslösekreis ein Differenzstrom-Schutzschalter bereit gestellt, der sowohl für wechselstromsensitive als auch für pulsstromsensitive Ausführungen besonders geeignet ist.

Nachfolgend wird ein Ausführungsbeispiel der Erfindung anhand einer Zeichnung näher erläutert. Darin zeigen:

FIG 1 in einem Prinzipschaltbild einen DI-Schutzschalter mit einer Signalaufbereitungs-Schaltung zur Gleichrichtung und Verstärkung einer Eingangsspannung, und

FIG 2 ein Schaltbild der Signalaufbereitungs-Schaltung gemäß FIG 1 mit einem diodenfreien Vollweggleichrichter, und

FIG 3 in Signalverlaufsdiagrammen die Funktionsweise des Vollweggleichrichters der Signalaufbereitungs-Schaltung gemäß FIG 2.

Einander entsprechende Teile sind in allen Figuren mit den gleichen Bezugszeichen versehen.

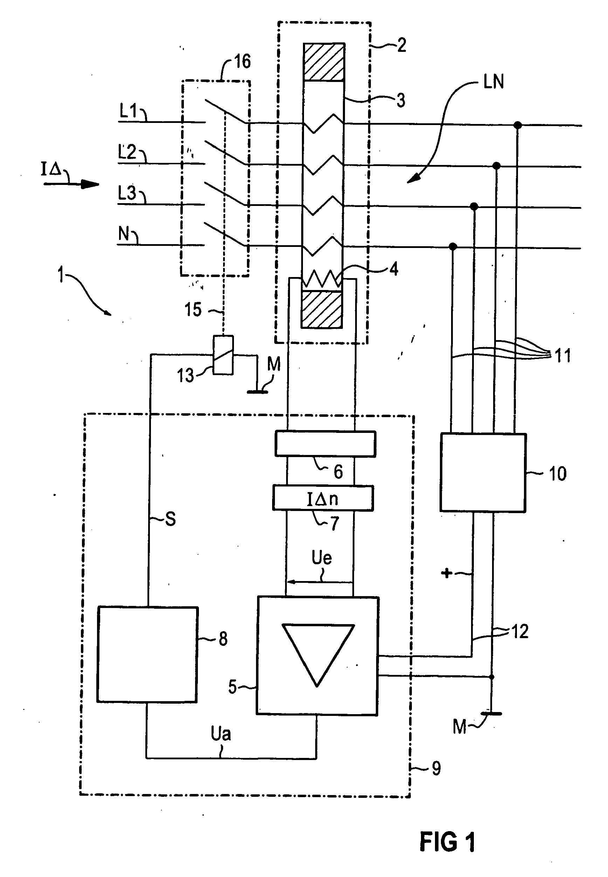

Der in FIG 1 dargestellte DI-Schutzschalter 1 umfasst einen Summenstromwandler 2 mit einem Wandlerkern 3, durch welchen die drei Phasenleiter Li, i = 1,2,3, sowie der Nullleiter N eines 4-Leiternetzes LN geführt sind. Der DI-Schutzschalter 1 ist dabei einem (nicht dargestellten) elektrischen Verbraucher vorgeschaltet, welcher aus dem Leiternetz LN mit Strom versorgt wird.

Der Wandlerkern 3 ist des Weiteren mit einer Sekundärwicklung 4 versehen, welche mit einer Signalaufbereitungs-Schaltung 5 verbunden ist. Im störungsfreien Betrieb des Leiternetzes LN ist die Summe der durch den Wandlerkern 3 fließenden Ströme stets Null. Eine Störung tritt dann auf, wenn - z.B. infolge eines Leckstroms - ein Teil des zugeführten Stromes verbraucherseitig über Erde abgeführt wird. In diesem Fall ergibt die Summe der durch den Wandlerkern 3 fließenden Ströme einen von Null verschiedenen Betrag. Dieser Differenzstrom oder Fehlerstrom $I\Delta$ induziert in der Sekundärwicklung 4 ein als Maß für den Fehlerstrom $I\Delta$ dienendes Spannungssignal, welches als Eingangsspannung $U_e$ der Signalaufbereitungs-Schaltung 5 zugeführt wird. Der Sekundärwicklung 4 und der Signalaufbereitungs-Schaltung 5 sind ein Überspannungsschutz 6 sowie eine veränderliche Bürde 7 zwischengeschaltet. Mittels der Bürde 7 kann der Nennfehlerstrom $I\Delta n$ des DI-Schutzschalters 1 innerhalb eines vorgegebenen Bereiches variiert werden. Der Nennfehlerstrom $I\Delta n$ ist ein Maß für die Auslöseempfindlichkeit des DI-Schutzschalters 1.

Die Eingangsspannung $U_e$ wird innerhalb der Signalaufbereitungs-Schaltung 5 gleichgerichtet und verstärkt. Die Signalaufbereitungs-Schaltung 5 wandelt die Eingangsspannung $U_e$ in eine gleichgerichtete und verstärkte Ausgangsspannung $U_a$ um. Diese Ausgangsspannung $U_a$ wird einer nachgeschalteten Auswerte- und Ansteuerschaltung 8 zugeleitet. Die Auswerte- und Ansteuerschaltung 8, die Signalaufbereitungs-Schaltung 5 sowie die Bürde 7 und der Überspannungsschutz 6 werden zusammenfassend als Auslösekreis-Elektronik 9 bezeichnet.

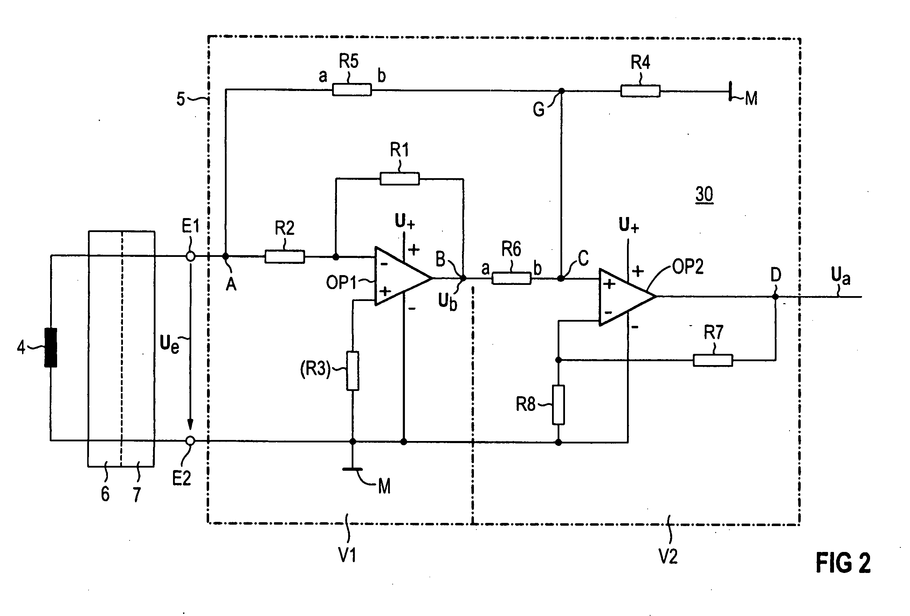

Zum Betrieb der Auslösekreis-Elektronik 9, insbesondere der Signalaufbereitungs-Schaltung 5 und der Auswerte- und Ansteuerschaltung 8 wird der DI-Schutzschalter 1 - im Gegensatz zu einem netzspannungsunabhängigen FI-Schutzschalter - über ein Netzteil 10 mit Strom versorgt. Das Netzteil 10 ist zu diesem Zweck über Versorgungsleitungen 11 an die Leiter Li,N des Leiternetzes LN angeschlossen. Das Netzteil 10 stellt der Signalaufbereitungs-Schaltung 5 über Verbindungsleitungen 12 eine bezogen auf Massepotenzial M positive Betriebsspannung (+) von z. B. 12V (FIG 2) zur Verfügung.

Die Ausgangsspannung $U_a$ wird innerhalb der Auswerte- und Ansteuerschaltung 8 bewertet. Erfüllt die Ausgangsspannung $U_a$ hinsichtlich ihrer Amplitude und/oder ihrer Fortdauer eine vorgegebene Auslösebedingung, so gibt die Auswerte- und Ansteuerschaltung 8 ein Auslösesignal S an das beispielsweise ausgangsseitig mit Massepotenzial M verbundene Auslöserelais 13 ab. Das Auslöserelais 13 betätigt daraufhin eine Schaltmechanik 15, welche die Schaltkontakte eines auf alle Leiter Li,N des Leiternetzes LN wirkenden Schalters 16 öffnet.

In FIG 2 ist die schaltungstechnische Realisierung der Signalaufbereitungs-Schaltung 5 dargestellt. Der der Sekundärwicklung 4 parallel geschaltete Überspannungsschutz 6 kann in nicht näher dargestellter Art und Weise zwei antiparallel geschaltete Dioden umfassen, die die Eingangsspannung $U_e$ auf einen Maximalbetrag von z.B. 0,6V begrenzen. Die dem Überspannungsschutz 6 parallel geschaltete Bürde 7 kann als veränderlicher ohmscher Widerstand realisiert sein.

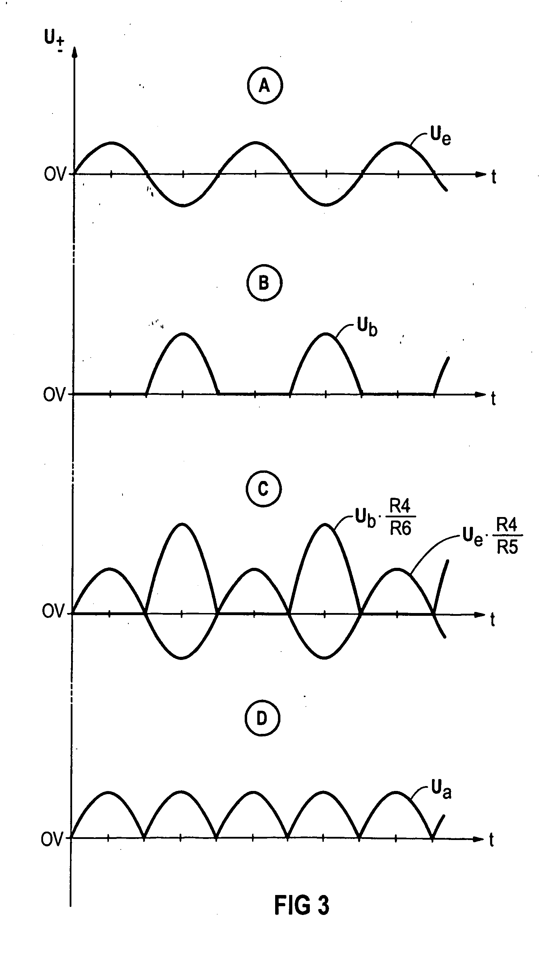

Die Signalaufbereitungs-Schaltung 5 umfasst einen zweistufigen Vollweggleichrichter 30, zwischen dessen Eingangskontakten E1 und E2 die Eingangsspannung $U_e$- mit Masse oder Bezugspotenzial M am Eingangskontakt E2 - liegt. Die Funktionsweise des aus einer als Invertierer arbeitenden ersten Verstärkerstufe V1 und einer als Mehrfach-Subtrahierer arbeitenden zweiten Verstärkerstufe V2 aufgebauten Vollweggleichrichters 30 wird nachfolgend auch anhand der FIG 3 beschrieben.

Der Vollweggleichrichter 30 enthält zwei Operationsverstärker OP1 und OP2, die mit den Widerständen R1 bis R8 beschaltet sind. Bei den Operationsverstärkern OP1 und OP2 werden die positive (+) Betriebsspannung von beispielsweise 12V zugeführt, während der Minus-Anschluss (-) mit Masse M verbunden ist.

Ein erster Widerstand R1 ist zwischen den mit B bezeichneten Ausgang und den N-Eingang (-) des (ersten) Operationsverstärkers OP1 der ersten Verstärkerstufe V1 geschaltet. Ein ebenfalls mit dem N-Eingang dieses ersten Operationsverstärkers OP1 verbundener zweiter Widerstand R2 liegt über den mit A bezeichneten Anschlusspunkt am Eingangskontakt E1.

Optional kann der P-Eingang (+) des ersten Operationsverstärkers OP1 über einen Widerstand R3 gegen Masse M geschaltet sein. Der Widerstand R3 dient zur Kompensation der Eingangsruheströme des Operationsverstärkers OP1 der Verstärkerstufe V1 mit dem Ziel, dass zwischen dem N-Eingang und dem P-Eingang des ersten Operationsverstärkers OP1 nur eine minimale Offset-Spannung ($U_\pm \approx 0V$) liegt.

Mit dem Anschlusspunkt A ist ein fünfter Widerstand R5 verbunden, der seinerseits mit einem an Masse M geschalteten vierten Widerstand R4 verbunden ist. Ein Abgriff G zwischen diesem, aus dem vierten und fünften Widerstand R4 bzw. R5 gebildeten Spannungsteiler ist mit einem Anschlusspunkt C verbunden, der einerseits mit einem sechsten Widerstand R6 und andererseits mit dem P-Eingang (+) des (zweiten) Operationsverstärkers OP2 der zweiten Verstärkerstufe V2 verbunden ist. Der Widerstand R6 liegt andererseits an Punkt B, d. h. am Ausgang der ersten Verstärkerstufe V1 und damit am Invertierer-Ausgang.

Der N-Eingang (-) des zweiten Operationsverstärkers OP2 ist über einen (achten) Widerstand R8 gegen Masse M geschaltet. Der mit D bezeichnete Ausgang der zweiten Verstärkerstufe V2 und damit des Operationsverstärkers OP2 ist über einen (siebten) Widerstand R7 sowohl mit dem N-Eingang des zweiten Operationsverstärkers OP2 als auch mit dem Widerstand R8 verbunden.

FIG 3 zeigt im oberen Spannungs-/Zeit-Diagramm den - hier vereinfacht sinusförmigen - Verlauf der Eingangsspannung $U_e$ um das Bezugspotenzial M = 0V am Punkt A. Dabei sind auf der Ordinate jeweils die Spannung mit dem Maximalwert der Betriebsspannung $U_\pm$ und auf der Abszisse die Zeit t aufgetragen. Gemäß dem zweiten Diagramm der FIG 3 liegt am Ausgang der ersten Verstärkerstufe V1 und damit am Punkt B die um den Verstärkungsfaktor R1/R2 verstärkte Eingangsspannung $U_e$ mit lediglich dessen negativer Halbwelle, die durch die als Invertierer arbeitende Verstärkerstufe V1 in entsprechende positive Halbwellen umgewandelt werden. Bei den positiven Halbwellen der Eingangsspannung $U_e$ geht der Verstärkerausgang B der ersten Verstärkerstufe V1 auf Massepotenzial M.

Da die zweite Verstärkerstufe V2 als Mehrfach-Subtrahierer arbeitet, werden aufgrund der Art und Weise der Beschaltung die Spannungen am Punkt a des Widerstands R5 und am Punkt a des Widerstands R6 positiv bewertet addiert. Die entsprechenden Signalverläufe am Punkt C sind im dritten Diagramm in FIG 3 veranschaulicht. Die Eingangsspannung $U_e$ ist dabei um den Verstärkungsfaktor R4/R5 verstärkt, während die Spannung $U_b$ am Punkt B, d. h. am Invertierer-Ausgang mit dem Verstärkungsfaktor R4/R6 verstärkt ist.

Durch die Addition dieser beiden Signal- oder Spannungsverläufe ergibt sich am Ausgang des Operationsverstärkers OP2 der zweiten Verstärkerstufe 2 und damit am Punkt D der im unteren Diagramm der FIG 3 dargestellte Signalverlauf der Ausgangsspannung $U_a$ als gleichgerichtete verstärkte Eingangsspannung $U_e$ mit lediglich positiven Halbwellen gleicher Amplitude. Mit diesem aus dem Invertierer und dem Subtrahierer aufgebauten Vollweggleichrichter 30 wird somit die Eingangsspannung $U_e$ sowohl gleichgerichtet als auch verstärkt.

Der im unteren Diagramm der FIG 3 dargestellte Signal- bzw. Spannungsverlauf ergibt sich unter den Dimensionierungs-Bedingungen:

$$R1/R2 = R4/R5$$

und

$$R4/R6 = 2$$

und

$$R7 = R4$$

und

$$R8 = (R5 \cdot R6)/(R5 + R6) \approx R5, \text{ wenn } R5 \ll R6.$$

Dies ist bei größeren Verstärkungsfaktoren der Fall. Daraus ergibt sich als Ausgangsspannung $U_a$ am Punkt D der zweiten Verstärkerstufe V2: $U_a = |U_e| \cdot (R1/R2)$.

Bei negativer Spannung $U_e$ am Summenstromwandler 2 wird die Ausgangsspannung $U_b$ am Operationsverstärker OP1 der ersten Verstärkerstufe V1, mit $U_b = U_e \cdot (-R1/R2)$, mit dem Verstärkungsfaktor $(+R4/R6)$ verstärkt. Gleichzeitig wird die Eingangsspannung $U_e$ mit dem Verstärkungsfaktor $+R4/R5$ verstärkt. Am Ausgang D des Operationsverstärkers OP2 der zweiten Verstärkerstufe 2 liegt dann die Summe beider Spannungen mit $U_a = [U_e \cdot (-R1/R2) \cdot (+R4/R6)] + [(+R4/R5) \cdot U_e] = U_e \cdot (-R1/R2)$ an.

Bei positiver Eingangsspannung $U_e$ wird zur Verstärker-Ausgangsspannung $U_b$ der ersten Verstärkerstufe V1 $(= 0V)$ die mit dem Verstärkungsfaktor $(+R4/R5)$ multiplizierte Spannung $U_e$ addiert. Die Ausgangsspannung $U_a$ der zweiten Verstärkerstufe V2 ergibt sich demnach zu $U_a = 0V + U_e \cdot (+R4/R5) = Ue \cdot (+R4/R5) = U_e \cdot (R1/R2)$.

Unter Berücksichtigung dieser Dimensionierungs-Bedingungen werden negative Eingangssignale $U_e$ invertiert und verstärkt, während positive Eingangssignale $U_e$ nicht-invertiert mit dem identischen Verstärkungsfaktor verstärkt werden. Somit werden die Bedingungen für eine Vollweggleichrichtung erfüllt.

Die externe Beschaltung der beiden Operationsverstärker OP1 und OP2 der Verstärkerstufen V1 bzw. V2 des Vollweggleichrichters 30 ohne Halbleiterbauelemente hat den wesentlichen Vorteil, dass bei hochohmiger bzw. stromsparender Beschaltung, die Grundvoraussetzung für ein kostengünstiges Netzteil ist, relativ kostenintensive Gleichrichterdioden mit geringem Leckstrom entfallen können. Durch die Festlegung der angegebenen Dimensionierungs-Bedingungen ist eine Vollweggleichrichtung ohne Gleichrichterdioden in besonders zuverlässiger Art und Weise ermöglicht.

**Patentansprüche**

1. Fehlerstrom-Schutzeinrichtung, mit einem Summenstromwandler (2), dem sekundärseitig über eine Signalaufbereitungs-Schaltung (5) mit einem Vollweggleichrichter (30) zur bipolaren Gleichrichtung und Verstärkung einer von der Sekundärwicklung (4) des Summenstromwandlers (2) angelegten Eingangsspannung ($U_e$) ein Auslöserelais (13) zur Betätigung eines Schalters (16) im angeschlossenen Leiternetz (LN) nachgeschaltet ist, **gekennzeichnet durch** einen zweistufigen Vollweggleichrichter (30) mit einer als Invertierer arbeitenden ersten Verstärkerstufe (V1) sowie einer als Subtrahierer arbeitenden zweiten Verstärkerstufe (V2).

2. Schutzeinrichtung nach Anspruch 1, **dadurch gekennzeichnet, dass** die zweite- Verstärkerstufe (V2) als Mehrfach-Subtrahierer aufgebaut ist.

3. Schutzeinrichtung nach Anspruch 1 oder 2, **dadurch gekennzeichnet, dass** die Ausgangsspannung ($U_a$) der zweiten Verstärkerstufe (V2) gleich der Summe aus der verstärkten Eingangsspannung ($U_e$) und der verstärkten Ausgangsspannung ($U_b$) der ersten Verstärkerstufe (V1) ist.

4. Schutzeinrichtung nach einem der Ansprüche 1 bis 3, **dadurch gekennzeichnet, dass** die zweite Verstärkerstufe (V2) die um einen ersten Verstärkungsfaktor (R4/R5) verstärkte Eingangsspannung ($U_e$) und eine um einen zweiten Verstärkungsfaktor (R4/R6) verstärkte Ausgangsspannung ($U_b$) der ersten Verstärkerstufe (V1) zusammenführt.

**5.** Schutzeinrichtung nach einem der Ansprüche 1 bis 4, **dadurch gekennzeichnet, dass** ein (erster) Widerstand (R1) zwischen den Ausgang (B) und den negativen Eingang (-) eines (ersten) Operationsverstärkers (OP1) der ersten Verstärkerstufe (V1) geschaltet, und dass dem negativen Eingang (-) des Operationsverstärkers (OP1) der ersten Verstärkerstufe (V1) die Eingangsspannung ($U_e$) über einen (zweiten) Widerstand (R1) zugeführt ist.

**6.** Schutzeinrichtung nach Anspruch 5, **dadurch gekennzeichnet, dass** der positive Eingang (+) des Operationsverstärkers (OP1) der ersten Verstärkerstufe (V1) über einen (dritten) Widerstand (R3) mit Bezugspotential (M) verbunden ist.

**7.** Schutzeinrichtung nach einem der Ansprüche 1 bis 6, **dadurch gekennzeichnet, dass** die Eingangsspannung ($U_e$) über einen Spannungsteiler (R5,R4) an den positiven Eingang (+) eines (zweiten) Operationsverstärkers (OP2) der zweiten Verstärkerstufe (V2) geführt ist, und dass dieser positive Eingang (+) über einen (sechsten) Widerstand (R6) mit dem Ausgang (B) der ersten Verstärkerstufe (V1) verbunden ist.

**8.** Schutzeinrichtung nach Anspruch 7, **dadurch gekennzeichnet, dass** die Widerstandsverhältnisse des ersten und zweiten Widerstandes (R1,R2) sowie des vierten und fünften Widerstandes (R4,R5) gleich sind (R1/R2 = R4/R5), und dass das Widerstandsverhältnis des vierten und sechsten Widerstandes (R4,R6) gleich zwei ist (R4/R6 = 2).

**9.** Schutzeinrichtung nach Anspruch 7 oder 8, **dadurch gekennzeichnet, dass** der Ausgang (D) der zweiten Verstärkerstufe (V2) über einen (siebten) Widerstand (R7) mit dem negativen Eingang (-) des Operationsverstärkers (OP2) der zweiten Verstärkerstufe (V2) verbunden ist, und dass dieser negative Eingang (-) über einen (achten) Widerstand gegen Bezugspotenzial bzw. Masse geschaltet ist.

**10.** Schutzeinrichtung nach Anspruch 9, **dadurch gekennzeichnet, dass** die Widerstandswerte des vierten und siebten Widerstandes (R4,R7) gleich sind (R7 = R4), und dass der Wert des achten Widerstandes (R8) gleich dem Quotienten aus dem Produkt und der Summe der Widerstandswerte des fünften und sechsten Widerstandes (R5,R6) ist (R8 = (R5 · R6) / (R5 + R6) ) .

## Claims

**1.** Differential current protective device, with a differential transformer (2), to which a trigger relay (13) for actuating a switch (16) in the connected conductor network (LN) is connected downstream on the secondary side via a signal processing circuit (5) to a full-wave rectifier (30) for bipolar rectification and amplification of an input voltage ($U_e$) applied by the secondary winding (4) of the differential transformer (2), **characterized by** a two-stage full-wave rectifier (30), with a first amplifier stage (V1) operating as an inverter as well as a second amplifier stage (V2) operating as a subtractor.

**2.** Protective device according to claim 1, **characterized in that** the second amplifier stage (V2) is constructed as a multiple subtractor.

**3.** Protective device according to claim 1, or 2 **characterized in that** the output voltage ($U_a$) of the second amplifier stage (V2) is equal to the sum of the amplified input voltage ($U_e$) and the amplified output voltage ($U_b$) of the first amplifier stage (V1) .

**4.** Protective device according to one of claims 1 to 3, **characterized in that** the second amplifier stage (V2) brings together the input voltage ($U_e$) amplified by a first amplification factor (R4/R5) and an output voltage ($U_b$) amplified by a second amplification factor (R4/R6) of the first amplifier stage (V1).

**5.** Protective device according to one of claims 1 to 4, **characterized in that** a (first) resistor (R1) is connected between the output (B) and the negative input (-) of a (first) operational amplifier (OP1) of the first amplifier stage (V1), and that the negative input (-) of the operational amplifier (OP1) of the first amplifier stage (V1) is supplied with the input voltage ($U_e$) via a (second) resistor (R1).

**6.** Protective device according to claim 5, **characterized in that** the positive input (+) of the operational amplifier (OP1) of the first amplifier stage (V1) is connected via a (third) resistor (R3) to reference potential (M).

**7.** Protective device according to one of claims 1 to 6, **characterized in that** the input voltage ($U_e$) is routed via a voltage divider (R5, R4) to the positive input (+) of a (second) operational amplifier (OP2) of the second amplifier stage (V2), and that this positive input (+) is connected via a (sixth) resistor (R6) to the output (B) of the first amplifier stage (V1).

8. Protective device according to claim 7, **characterized in that** the resistance ratios of the first and second resistor (R1, R2) as well as the fourth and fifth resistor (R4, R5) are equal (R1/R2 = R4/R5), and that the resistance ratio of the fourth and sixth resistor (R4, R6) is equal to two (R4 /R6 = 2) .

9. Protective device according to claim 7 or 8, **characterized in that** the output (D) of the second amplifier stage (V2) is connected via a (seventh) resistor (R7) to the negative input (-) of the operational amplifier (OP2) of the second amplifier stage (V2), and that this negative input (-) is connected via an (eighth) resistor to reference potential or ground respectively.

10. Protective device according to claim 9, **characterized in that** the resistance values of the fourth and seventh resistor (R4, R7) are equal (R7 = R4), and that the value of the eighth resistor (R8) is equal to the quotient from the product and the sum of the resistance values of the fifth and sixth resistor (R5, R6) (R8 = (R5 · R6) / (R5 + R6)).

**Revendications**

1. Dispositif de protection contre des courants de défaut, comprenant un transformateur de courant totalisateur (2), en aval duquel est monté, au moyen d'un circuit de régénération de signal (5) avec un redresseur pleine-onde (30) pour le redressement et l'amplification bipolaires d'une tension d'entrée ($U_e$) appliquée par l'enroulement secondaire (4) du transformateur de courant totalisateur (2), du côté secondaire un relais de déclenchement (13) pour l'actionnement d'un interrupteur (16) dans le réseau conducteur connecté (LN), **caractérisé par** un redresseur pleine-onde (30) à deux niveaux comprenant un premier niveau amplificateur (V1) travaillant comme inverseur et un second niveau amplificateur (V2) travaillant comme soustracteur.

2. Dispositif de protection selon la revendication 1, **caractérisé en ce que** le second niveau amplificateur (V2) est conçu comme soustracteur multiple.

3. Dispositif de protection selon la revendication 1 ou 2, **caractérisé en ce que** la tension de sortie ($U_a$) du second niveau amplificateur (V2) est égale à la somme résultant de la tension d'entrée ($U_e$) amplifiée et de la tension de sortie ($U_b$) amplifiée du premier niveau amplificateur (V1).

4. Dispositif de protection selon l'une quelconque des revendications 1 à 3, **caractérisé en ce que** le second niveau amplificateur (V2) concentre la tension d'entrée ($U_e$) amplifiée d'un premier facteur d'amplification (R4/R5) et une tension de sortie ($U_b$), amplifiée d'un second facteur d'amplification (R4/R6), du premier niveau amplificateur (V1).

5. Dispositif de protection selon l'une quelconque des revendications 1 à 4, **caractérisé en ce qu'**une (première) résistance (R1) est branchée entre la sortie (B) et l'entrée (-) négative d'un (premier) amplificateur opérationnel (OP1) du premier niveau amplificateur (V1), et **en ce que** la tension d'entrée ($U_e$) est amenée par une (seconde) résistance (R1) à l'entrée (-) négative de l'amplificateur opérationnel (OP1) du premier niveau amplificateur (V1).

6. Dispositif de protection selon la revendication 5, **caractérisé en ce que** l'entrée (+) positive de l'amplificateur opérationnel (OP1) du premier niveau amplificateur (V1) est reliée par une (troisième) résistance (R3) à du potentiel de référence (M).

7. Dispositif de protection selon l'une quelconque des revendications 1 à 6, **caractérisé en ce que** la tension d'entrée ($U_e$) est guidée par un diviseur de tension (R5, R4) sur l'entrée (+) positive d'un (second) amplificateur opérationnel (OP2) du second niveau amplificateur (V2), et **en ce que** cette entrée (+) positive est reliée par une (sixième) résistance (R6) à l'entrée (B) du premier niveau amplificateur (V1).

8. Dispositif de protection selon la revendication 7, **caractérisé en ce que** les rapports de résistance de la première et de la seconde résistances (R1, R2) ainsi que de la quatrième et de la cinquième résistances (R4, R5) sont identiques (R1/R2 = R4/R5), et **en ce que** le rapport de résistance de la quatrième et de la sixième résistances (R4, R6) est égal à deux (R4/R6 = 2).

**9.** Dispositif de protection selon la revendication 7 ou 8, **caractérisé en ce que** la sortie (D) du second niveau amplificateur (V2) est reliée par une (septième) résistance (R7) à l'entrée (-) négative de l'amplificateur opérationnel (OP2) du second niveau amplificateur (V2), et **en ce que** cette entrée (-) négative est branchée au moyen d'une (huitième) résistance contre le potentiel de référence ou la masse.

**10.** Dispositif de protection selon la revendication 9, **caractérisé en ce que** les valeurs de résistance de la quatrième et de la septième résistances (R4, R7) sont identiques (R7 = R4), et **en ce que** la valeur de la huitième résistance (R8) est identique au quotient du produit et de la somme des valeurs de résistance de la cinquième et de la sixième résistances (R5, R6) (R8 = (R5 · R6) / (R5 + R6)).

**FIG 1**

R5
a b
R4
M
5
G
R1
30
U+
E1
R2
R6
U+
OP2
D
A
B a b C
Ua
OP1
+
+
−
R7
4
Ue
(R3)
Ub
−
R8
M
E2
M
6 7
V1
V2

**FIG 2**

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0987805 A1

- GB 2170367 A